# EUROPEAN PATENT APPLICATION

(11) **EP 1 133 082 A1**
(43) Date of publication of application: **12.09.2001**
(21) Application number: 00400681.3
(22) Date of filing: 10.03.2000
(51) Int. Cl.: H04B 10/08

(54) **Optical monitoring system**

(71) Applicant: Corning Incorporated, Corning, New York 14831 (US)
(72) Inventor: Maigne, Pascal Philippe, Corning, NY 14831 (US); Piehler, Julia W., Corning, NY 14831 (US)
(74) Representative: Boon, Graham Anthony

(57) **Abstract**

An optical monitor for an optical communication system is provided. The optical monitor includes a substrate having a waveguide formed thereon for carrying an optical signal. An optical tap is connected to the waveguide for tapping a portion of the optical signal. A demultiplexing device is connected to the optical tap for receiving the optical signal and separating the optical signal into a plurality of demultiplexed signals. A photodiode array receives the plurality of demultiplexed signals and generates an electrical signal relating to characteristics associated with the optical signal.

## Description

### BACKGROUND OF THE INVENTION

### 1. Field of the Invention

The present invention relates generally to an optical monitor for a communication system. More particularly, the present invention is directed to a optical monitor using a semiconductor optical amplifier (SOA) for an optical communication system.

### 2. Technical Background

Wavelength division multiplexing (WDM) is the practice of transmitting data streams at multiple wavelengths along a single optical fiber in order to increase the total rate of data transmission along that fiber. WDM also offers the possibility to perform operations upon each wavelength individually. These operations might include adding each wavelength to, or dropping each wavelength from, the main data stream, or changing the particular wavelength's intensity or other properties, at locations intermediate to its point of origin and its point of termination. In such systems, it is useful to periodically monitor individually each signal wavelength for the purpose of fault identification, monitoring changes in the system due to aging and other causes, as well as for general control purposes.

At present, the number of wavelengths used in optical communication systems is increasing, and the number and complexity of different operations performed on the signal, which may affect one or more signals differently than the others is also increasing. As a result, the amount of monitoring and other equipment needed to perform these functions is also increasing. This motivates efforts to find devices for optical monitoring of individual signal wavelengths and noise levels that are reliable, field-deployable, compact and have low power consumption and heat dissipation requirements.

### SUMMARY OF THE INVENTION

The present invention is directed to an optical channel monitor incorporating a fixed demultiplexer (demux) with no moving parts, and photodetectors (PDs), with which the presence and intensity of the signal and associated noise levels can be measured. In this device, the demux has an individual output tuned to the wavelength of each signal, and additional outputs tuned between signal channels or to a higher or lower frequencies than the signal, to capture the noise performance of the system. Because this device has no moving parts, it offers a compact, high reliability, low power consumption technique for monitoring performance of a communication system transmitting a multi-wavelength optical signal. Accordingly, the present invention provides an optical channel monitor incorporating a semiconductor optical amplifier (SOA). The incorporation of the SOA provides a low cost, compact, low loss device which is sensitive over a broad range of wavelengths.

In accordance with the teachings of the present invention an optical monitor for an optical communication system is disclosed. The optical monitor includes a substrate having a waveguide formed thereon for carrying an optical signal. An optical tap is connected to the waveguide for tapping a portion of the optical signal. A demultiplexing device is connected to the optical tap for receiving the optical signal and separating the optical signal into a plurality of demultiplexed signals. A photodiode array receives the plurality of demultiplexed signals and generates an electrical signal relating to characteristics associated with the optical signal.

### BRIEF DESCRIPTION OF THE DRAWINGS

The various advantages of the present invention will become apparent to one skilled in the art by reading the following specification and appended claims, and by referencing the following drawings in which:
Figure 1 is a schematic diagram showing a plan view of an optical monitor for signal and noise in accordance with a preferred embodiment of the present invention;
Figure 2 is a schematic diagram showing a cross section of the optical monitor of Figure 1; and
Figure 3 is a schematic diagram showing a plan view of a WDM optical monitor with a semiconductor optical amplifier (SOA) in accordance with an alternate preferred embodiment of the present invention.

### DETAILED DESCRIPTION OF THE PREFERRED EMBODIMENTS

The present invention discloses a device for monitoring the presence and intensity of individual signal wavelengths, and adjacent noise intensity, of a multi-wavelength optical signal, using a demux and photodetectors. The device of the present invention can be made quite compact, and because it has no moving parts has the potential to have lower power consumption and higher reliability than those devices which require moving parts.

The present invention also discloses a technique for making a compact, low loss device for monitoring the individual wavelengths in a multi-wavelength optical signal using a component capable of demultiplexing a multi-wavelength optical signal (a demux), and in one implementation a semiconductor optical amplifier (SOA) provides amplification to the optical signal. An exemplary embodiment of such a device, described below, is the integration, such as the planar hybridization of a SOA with an arrayed waveguide grating (AWG) and photodetectors (PDs).

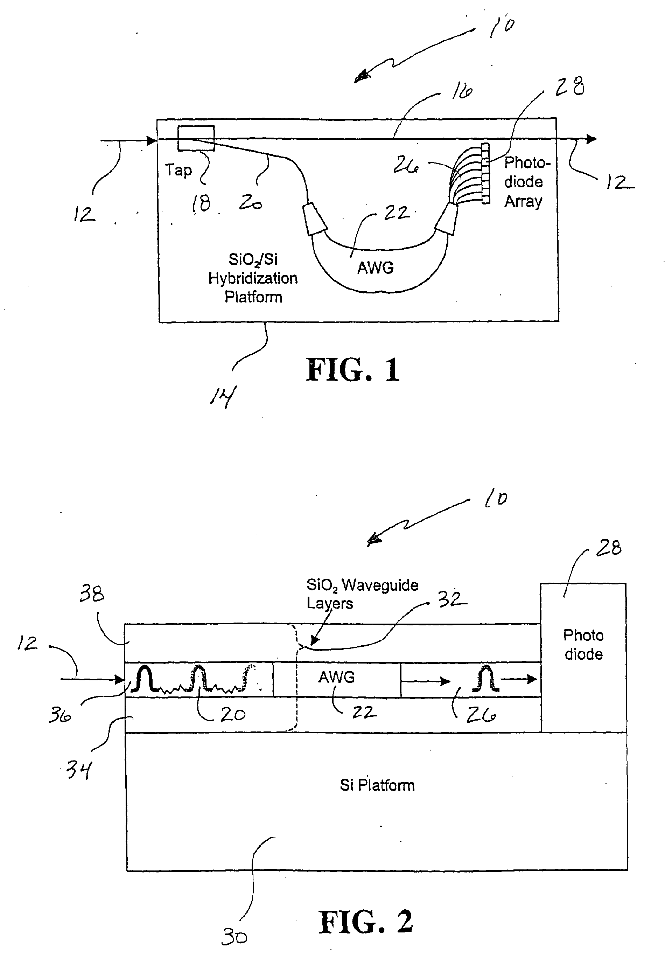

Turning now to Figure 1 the optical monitor 10 is shown in accordance with a preferred embodiment of the present invention. As will be appreciated, the optical monitor 10 is a planar photonic component in which active and passive functions are combined together into a single device. The optical monitor 10 is preferably connected to an optical waveguide such as optical fiber 12 which is appropriately designed for carrying a multi-wavelength or WDM optical signal.

The optical monitor 10 is formed on a substrate 14, preferably a silicon wafer which allows the optical monitor to be manufactured using known semiconductor fabrication techniques. An optical waveguide 16 is appropriately formed on the surface of the substrate 14. The substrate 14 also includes an optical tap 18 for tapping a fraction of approximately 1-10 percent of the initial signal intensity from the signal traveling through the optical waveguide 16. The untapped portion of the signal continues traveling along the optical fiber 12. The tapped signal travels through a tap line waveguide 20 where the signal is then demultiplexed by an arrayed waveguide grating (AWG) 22. As part of the present invention, AWG 22 is designed to include two times the number of outputs as there are signal channels, with the frequency interval between the centers of each output at half that of the signal channel spacing. For example, for a signal with 16 channels spaced at 200 GHz, the AWG 22 would have 32 channels spaced at 100 Ghz. Every second output thus can be used for monitoring the presence or absence of a signal in that channel and the signal intensity, and every other output can be used for monitoring noise intensity.

Each signal channel or noise window output from the AWG 22 is directed to a photodiode array 28 via individual optical waveguides 26. As shown, the photodiode array 28 includes eight photodiodes. However, one skilled in the art will really appreciate that the number of photodiodes can be appropriately matched to the design of the AWG 22 and the optical monitor 10. Accordingly, the photo detection is performed by the photodiodes 28 which are hybridized onto the same substrate 14 as the AWG 22. The intensity measured by the photodiodes 28 can be related back to the original intensity of the signal or noise as a function of wavelength by knowing the properties of the optical tap 18 and waveguide 16, the AWG 22, and the photodiodes 28, under the conditions of operation. Noise at the signal wavelengths can be estimated by interpolation from the noise measurements made at the adjacent higher and lower wavelength channels.

With reference to Figure 2, the various layers formed on substrate 14 for creating the optical monitor 10 are disclosed in greater detail. More specifically, the substrate 14 includes a silicon platform or wafer 30 upon which preferably a plurality of SiO₂ (silicon dioxide) waveguide layers 32 are deposited using known semiconductor fabrication techniques. The waveguide layers 32 are then optically connected to the photodiode array 28. As such, the passive functions referenced above are provided by the waveguide layers 32 on the surface of the silicon wafer 30, and the active functions referenced above are provided by the photodiode array 28.

The waveguide layers 32 include a first waveguide layer 34, a second waveguide layer 36, and a third waveguide layer 38. The second waveguide layer 36 is optically connected at a first end to the optical fiber 12, and connected at a second end to the photodiode array 28. The second waveguide layer 36 is the primary optical signal transmission medium, and after completely being fabricated includes the tap 18, the waveguide tap line 20, the AWG 22, and the waveguide array 26.

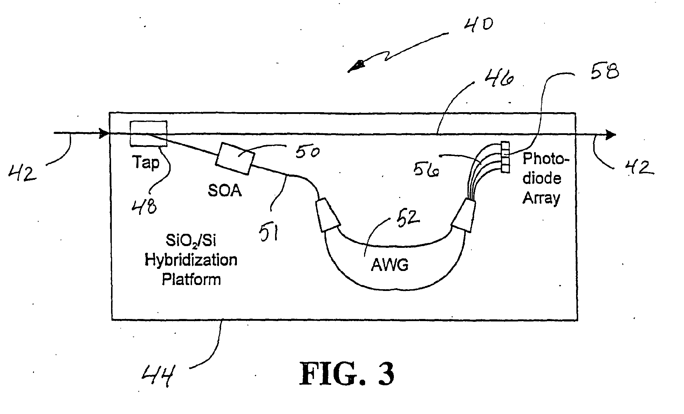

Referring now to Figure 3, the optical monitor with SOA 40 is shown in accordance with a preferred embodiment of the present invention. As will be appreciated, the optical monitor 40 is also a planar photonic component in which active and passive functions are combined together into a single device. The optical monitor 40 is preferably connected to an optical waveguide such as optical fiber 42 which is appropriately designed for carrying a multi-wavelength signal or WDM optical signal.

The optical monitor 40 is formed on a substrate 44, preferably a silicon wafer which allows the optical monitor to be manufactured using known semiconductor fabrication techniques. An optical waveguide 46 is formed on the surface of the substrate 44. The substrate 44 also includes an optical tap 48 for tapping a fraction of approximately 1-10 percent of the initial signal intensity from the optical signal traveling through the optical waveguide 46. The tapped signal then travels through a tap line waveguide 51 into a semiconductor optical amplifier (SOA) 50 where the signal is amplified. The output from SOA 50 can then be demultiplexed by an arrayed waveguide grating (AWG) 52. As part of the present invention, the AWG 52 is designed to include two times the number of outputs as there are signal channels, with the frequency intervals between the centers of each output at half that of the signal channel spacing. For example, for a signal with 16 channels spaced at 200 GHz, the AWG 52 would have 32 channels spaced at 100 GHz. Every second output thus can be used for monitoring the presence or absence of a signal in that channel and the signal intensity, and every other output can be used for monitoring noise intensity.

Each signal channel or noise window output from the AWG 52 is directed to a photodiode array 58 via individual optical waveguides 56. As shown, the photodiode array 58 includes four photodiodes. However, one skilled in the art will readily appreciate that the number of photodiodes can be appropriately matched to the design of the AWG 52. Accordingly, the photodetection is performed by the photodiodes 58 which are hybridized onto the same substrate 44 as the AWG 52. The intensity measured by the photodiodes 58 can be related back to the original intensity of the signal or noise as a function of wavelength by knowing the properties of the optical tap 48 and waveguide 46, the AWG 52, and the photodiodes 58, under the conditions of operation. Noise at the signal wavelengths can be estimated by interpolation from the noise measurements made at the adjacent higher and lower wavelength channels.

In operation, a small fraction of light is tapped off from the main signal transmitted along the optical fiber 12, 42. The tapped optical signal is then de-multiplexed by a device that contains no moving parts. The demultiplexing device such as the AWG 22, 52 should be designed to separate out the individual signal wavelengths of interest, and the noise windows of interest. For example, if the signal-spontaneous beat noise is desired, the approach may be to demultiplex the signal and a noise window at a higher and a lower frequency, and from these to interpolate the noise intensity of interest. Each signal and noise band are individually directed to a dedicated photodetector. At the photodetector, the optical signal is detected and transformed into an electrical signal, which is then relayed to that portion of the optical monitoring system dedicated to monitoring and control functions.

De-multiplexing may be achieved by a number of different devices, such as an AWG, or a concatenated series of thin film filters, or a circulator and series of fiber Bragg gratings or other filters. Photodetection may be achieved by individual or arrayed photodiodes, that may be front, back, or edge illuminated. Coupling between the demultiplexing device and the photodiodes may be direct, or may use intermediary optical components such as lenses, mirrors, planar waveguides and optical fiber.

Tapping of the signal via the optical tap 18, 48 can be achieved by a power splitter or any other device that samples the signal across the wavelength range of interest, preferably in a manner that has a low dependence on wavelength. This optical tap should also introduce as little other perturbation to the signal as possible. To allow for modularity or for the upgrade of a system to more wavelengths, more than one optical monitor 10, 40 can be concatenated or in some other way used together. In this case, each optical monitor would have a demux component optimized for a different set of wavelengths. Alternatively, one or more optical monitors may be used for signal detection, and one or more separate monitors may be used for noise detection.

The foregoing discussion discloses and describes exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. An optical monitor for an optical communication system comprising:
a substrate having a waveguide formed thereon for carrying an optical signal;
an optical tap connected to the waveguide for tapping a portion of the optical signal;
a demultiplexing device connected to the optical tap for receiving the optical signal and separating the optical signal into a plurality of demultiplexed signals; and
a photodiode array for receiving the plurality of demultiplexed signals and generating an electrical signal relating to characteristics associated with the optical signal.

2. The optical monitor of Claim 1 wherein the demultiplexing device is an arrayed waveguide grating (AWG).

3. The optical monitor of Claim 1 wherein the optical tap is a power splitter.

4. The optical monitor of Claim 1 wherein an amplifier is disposed between the optical tap and the demultiplexing device for amplifying the optical signal.

5. The optical monitor of Claim 4 wherein the amplifier is a semiconductor optical amplifier.

6. The optical monitor of Claim 1 wherein the optical signal is a wavelength division multiplexed (WDM) optical signal.

7. The optical monitor of Claim 1 wherein one characteristic associated with the optical signal is signal intensity.

8. The optical monitor of Claim 1 wherein one characteristic associated with the optical signal is signal noise intensity.

9. The optical monitor of Claim 2 wherein the AWG includes twice as many channels as there are demultiplexed signals associated with the optical signal.

10. An integrated optical monitor for an optical communication system comprising:
a silicon substrate having a plurality of silicon dioxide (SiO2) layers formed thereon, said plurality of silicon dioxide layers forming a plurality of optical elements;
an optical waveguide formed on the substrate for carrying an optical signal; a power splitter connected to the optical waveguide for tapping a portion of the optical signal;
an arrayed waveguide grating (AWG) connected to the power splitter for receiving the optical signal and separating the optical signal into a plurality of separate wavelength channels; and
a photodiode array for receiving the plurality of separate wavelength signals and generating an electrical signal relating to characteristics associated with the optical signal.

11. The optical monitor of Claim 10 wherein an amplifier is disposed between the power splitter and the AWG for amplifying the optical signal.

12. The optical monitor of Claim 11 wherein the amplifier is a semiconductor optical amplifier.

13. The optical monitor of Claim 10 wherein the optical signal is a wavelength division multiplexed (WDM) optical signal.

14. The optical monitor of Claim 1 wherein one characteristic associated with the optical signal is signal intensity.

15. The optical monitor of Claim 1 wherein one characteristic associated with the optical signal is signal noise intensity.

16. The optical monitor of Claim 10 wherein the AWG includes twice as many channels as there are demultiplexed signals associated with the optical signal.
